# FASCICULE DE BREVET EUROPEEN

(11) **EP 0 536 711 B1**
(45) Date de publication et mention de la délivrance du brevet: **05.06.1996**
(21) Numéro de dépôt: 92117093.2
(22) Date de dépôt: 07.10.1992
(51) Int. Cl.: B23H 11/00, B23Q 11/08

(54) **Bac d'usinage pour machine-outil et machine d'électroérosion équipée d'un tel bac**
Arbeitsbehälter für das Dielektrikum einer Funkenerosionsmaschine und Maschine versehen mit diesem Behälter
Working tank for an electroerosion machine and a machine equipped with such a tank

(30) Priorité: 08.10.1991 FR 9112504
(43) Date de publication de la demande: 14.04.1993
(73) Titulaire: CHARMILLES TECHNOLOGIES S.A., CH-1217 Meyrin 1 (CH)
(72) Inventeur: Bommeli, Bernard, CH-1110 Morges (CH); Oberson, André, CH-1206 Génève (CH)

(56) Documents cités:
- EP-A- 0 123 792
- FR-A- 2 266 571
- FR-A- 2 539 208

## Description

La présente invention concerne les bacs de travail pour machine-outil destinés à recevoir le liquide d'usinage et la pièce à usiner et comportant une partie fixe et une partie mobile.

Elle concerne également ces machines, en particulier les machines à électro-érosion équipées d'un tel bac.

Dans les machines-outils connues, en particulier les machines à électro-érosion, le bac de travail entoure complètement la zone d'usinage pendant ce dernier. Afin de libèrer l'accès à cette zone pour faciliter le démontage et remontage des pièces à usiner, diverses solutions ont été proposées dans l'état de la technique :
- un bac à parois démontables comme décrit par exemple dans CH 551 904, mais leur retrait occasionne une perte de temps non négligeable ;
- un bac à parois construites en accordéon comme décrit par exemple dans CH 400 408, DD 26 53 47, EP 347 716, ou formées d'éléments télescopiques, comme décrit par exemple dans la publication japonaise 2-048113, de manière à se rétracter vers la surface de la table de travail ; toutefois ces solutions sont relativement coûteuses; de plus, il y a un risque que les débris métalliques provenant de l'usinage grippent les mécanismes qui actionnent le repli des parois et diminuent leur étanchéité. Enfin, les parois ainsi repliées sont toujours un obstacle entourant la table de bridage de la pièce et dont la hauteur, bien que faible, empêche le transfert de la pièce depuis ou vers une palette mise au niveau de la table de bridage;
- un bac ou un ensemble formé par ses quatre parois, mobile et pivotable latéralement entre une position d'usinage et une position de repos hors de la zone d'usinage, comme décrit par exemple dans DE 32 13 013, FR 2 266 571; cette solution a au moins deux inconvénients : il faut protéger le trajet de pivotement pour des raisons de sécurité, et l'espace occupé par le bac ou la partie mobile en position de repos pourrait avantageusement être utilisé pour y disposer des organes relatifs au changement de la pièce à usiner ou des outils, ou d'autres dispositifs;
- un bac se rétractant dans le socle de la machine en coulissant le long d'une colonne centrale ou de piliers, comme décrit dans FR 1 235 514, DE 1 217 005 et US 3 612 810 ;
- un bac avec paroi arrière fixe, le long de laquelle coulisse l'ensemble mobile formé par les trois autres parois et le fond, entre position de travail et position de retrait dans le socle, comme décrit par exemple dans DE 25 14 899;
- un bac avec partie fixe, comportant le fond et la paroi arrière, et partie mobile formée, soit des trois autres parois et coulissant comme ci-dessus entre position de travail et position de retrait dans le socle, comme décrit par exemple dans EP 123 792, soit de la paroi avant et de la partie adjacente des parois latérales et coulissant le long des parties fixes des parois latérales, comme décrit dans la publication japonaise 2-00027.
Toutefois, ces trois dernières solutions ont l'inconvénient de faire appel à des dispositifs coulissants qui sont en contact pendant l'usinage avec le liquide chargé de débris métalliques, d'où un manque de fiabilité dû au risque de grippage déjà évoqué ci-dessus ; de plus il faut attendre la fin de la manoeuvre de retrait pour que le plan de la table de travail soit libéré. Enfin, les parois escamotées encombrent soit l'arrière du plan de travail, soit le socle, alors que ces espaces peuvent être très utiles pour y disposer par exemple des robots ou des magasins pour changer pièce à usiner et outil, des dispositifs d'injection et de filtration du liquide d'usinage, ou des réceptacles pour liquide usé, ou pour fil usé dans le cas de machines à fil.

La présente invention se propose de pallier ces inconvénients en réalisant un bac avec partie fixe et partie mobile, dont la partie mobile s'escamote de façon à dégager dès le début de la manoeuvre d'escamotage la zone de travail et à n'encombrer ni les abords du plan d'usinage, ni le socle.

Ce but est atteint par un bac d'usinage selon les caractéristiques de la revendication 1.

Pour faciliter la manoeuvre de déplacement de la partie mobile, lesdits moyens articulés peuvent être associés à des moyens mécaniques pour déplacer ladite partie mobile. Ces moyens mécaniques peuvent comporter au moins un ressort et/ou au moins un contrepoids et/ou au moins un vérin hydraulique ou pneumatique. Ils peuvent également comporter une motorisation électromécanique.

La partie mobile comprend avantageusement un organe coopérant avec un dispositif de blocage ou d'arrêt en position haute pour assurer la sécurité des utilisateurs pendant que la partie mobile du bac est relevée.
Dans une variante particulièrement avantageuse de la présente invention, la partie mobile vient s'appuyer en position haute contre l'élément du bâti de la machine dans lequel est emboîté le porteoutil, c'est-à-dire la tête d'usinage. Le dispositif de blocage mentionné ci-dessus peut alors être monté sur cet élément et comprendre une pièce actionnée par un ressort ou par tout autre moyen mécanique, pneumatique, hydraulique, magnétique, électrique de type connu, pour venir s'engager dans un logement prévu dans la partie mobile du bac, ou pour coopérer de toute autre manière connue avec un organe prévu dans cette partie mobile, de manière à la retenir en position haute. Au moment oú est effectuée la manoeuvre relevant la partie mobile, la tête d'usinage et la table de travail portant le bac occupent de préférence une position relative prédéterminée.
Selon un mode de réalisation particulièrement avantageux, la tête d'usinage peut présenter une avancée munie par exemple d'un rebord, ou profilée de manière à retenir la partie mobile ; cet élément est actionné par exemple par la commande numérique de la machine, de manière à venir engager ce rebord sous la partie mobile.

Pour éviter que le liquide d'usinage mouillant encore la partie mobile ne s'écoule et ne retombe en gouttes lorsqu'elle est relevée, elle peut être équipée le long de son bord inférieur d'une gouttière inclinée qui constitue un canal d'écoulement du liquide et l'amène vers un réceptacle.

La machine à électro-érosion selon l'invention est caractérisée en ce qu'elle comporte un bac d'usinage de ce type.

La présente invention sera mieux comprise en référence à la description d'un mode de réalisation préféré réalisé sur une machine d'enfonçage par électroérosion et du dessin annexé, dans lequel :
la figure 1 représente une vue en élévation de face, d'une première forme de réalisation d'une machine à électro-érosion selon l'invention dans laquelle le bac est en position abaissée;
la figure 2 représente cette machine, dans cette même position, mais vue de profil;
la figure 3 représente une vue en élévation, de face de cette machine à électro-érosion, dans laquelle le bac est en position relevée;
la figure 4 représente cette machine, dans cette même position, mais vue de profil;
la figure 5 représente une vue en élévation de face d'une deuxième forme de réalisation d'une machine à électro-érosion selon l'invention, dans laquelle le bac est en position abaissée;
la figure 6 représente cette même machine, dans cette position, vue de profil;
la figure 7 représente cette machine vue de face en élévation avec le bac en position relevée, et
la figure 8 représente cette machine, dans cette même position, vue de profil.

En référence aux figures, la machine à électro-érosion représentée comporte un socle 10 qui supporte une colonne 11 portant une tête d'usinage 12. Sur le socle 10 est montée une table à mouvements croisés XY mobile selon deux axes orthogonaux X et Y gràce à des coulisses 13a et 13b associées à des mécanismes de déplacement axial connus en soi. Ces mécanismes comportent par exemple deux moteurs pas à pas et deux vis à billes entraînées par ces moteurs.

Sur la tête d'usinage 12 est monté un porte-électrode 14, mobile verticalement selon un axe Z, et rotatif autour de cet axe dans deux directions opposées représentées par la double flèche R. Les mécanismes permettant les déplacements de la tête d'usinage sont également de type connu en soi. Ils comportent par exemple un premier moteur pas à pas couplé à une vis à billes pour engendrer le déplacement selon l'axe Z, et un deuxième moteur pas à pas couplé à une vis à billes qui engrène un pignon denté ayant un axe parallèle à l'axe Z, pour engendrer une rotation de la tête d'usinage dans un sens ou dans l'autre, comme le montre la flèche R.

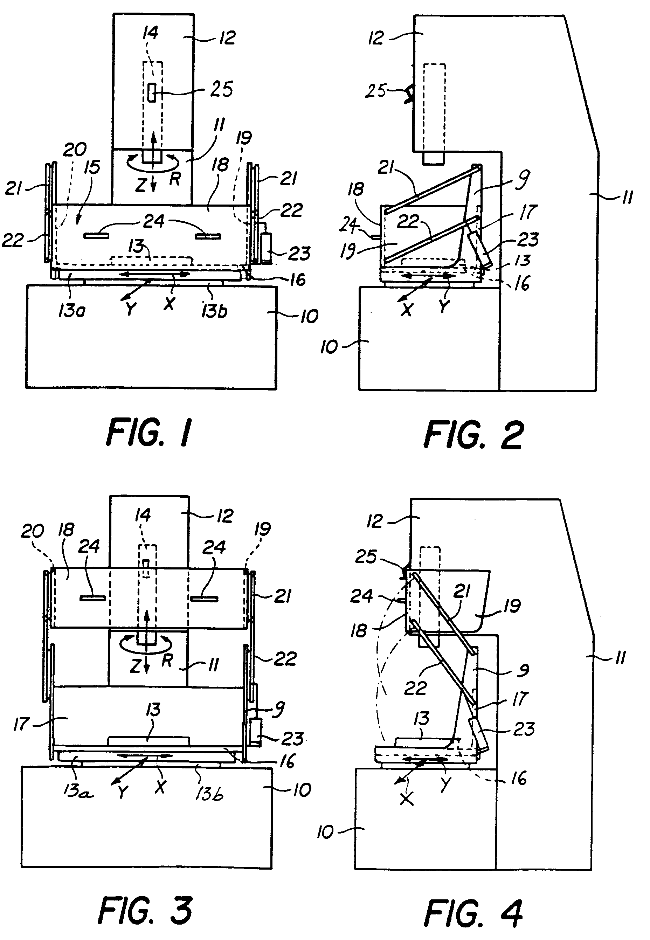

La table 13 de bridage de la pièce à usiner, dite table de travail, est fixée sur la table croisée XY et est encastrée dans le fond 16 d'un bac de travail ou d'usinage 15 qui se compose d'une partie fixe et d'une partie mobile, ces deux parties pouvant être réunies de manière étanche grâce à des agencements connus en soi, pour contenir un diélectrique liquide pendant la phase d'usinage. Selon une variante non représentée, la table de travail 13 peut constituer ce fond 16. La partie fixe comporte le fond 16 et la paroi arrière 17 du bac 15, ainsi que la partie 9 des faces latérales adjacente à cette paroi arrière 17. Ces parties 9 présentent avantageusement un profil oblique destiné en particulier à faciliter la réunion étanche des parties fixe et mobile du bac. De plus, selon le mode d'exécution préféré illustré dans cet exemple, ces parties 9 se prolongent plus bas que le fond du bac de manière à masquer le coulisseau supérieur de la table XY, qui est le coulisseau X dans la variante représentée au dessin. La partie mobile se compose de la face avant 18 et des parties 19 et 20 des deux faces latérales. Deux paires de bras articulés 21 et 22, parallèles entre eux pour former un parallélogramme, permettent de déplacer la partie mobile du bac 15 d'une position abaissée, dite position d'usinage, représentée aux figures 1 et 2, vers une position relevée, dite position de repos, représentée aux figures 3 et 4. Les bras 21 et 22 sont articulés, d'une part sur les extrémités latérales solidaires de la partie fixe, et d'autre part sur les parties mobiles 19 et 20 des faces latérales. Dans la réalisation représentée à titre d'exemple par les figures 1 à 4, le déplacement de la partie mobile de sa position abaissée vers sa position relevée est effectué au moyen d'un vérin hydraulique ou pneumatique 23 dont le corps est fixé au fond 16 ou à la paroi arrière 17 du bac et dont la tige de piston est fixée à l'un des bras articulés, dans cet exemple au bras 22. Il est bien entendu que ce mécanisme pourrait être remplacé par tout autre mécanisme ayant une fonction équivalente. La partie mobile du bac peut également être relevée manuellement. A cet effet la face avant 18 est équipée de deux poignées 24. On pourrait également prévoir un treuil à manivelle, un contrepoids, etc. Pour éviter que le diélectrique restant ne s'écoule et ne retombe en gouttes dans la zone de travail lorsque la partie mobile du bac est relevée, elle est équipée le long de son bord inférieur d'une gouttière inclinée qui constitue un canal d'écoulement du liquide et l'amène vers un bac de récupération (non représenté). Dans sa position relevée, la partie mobile du bac 15 est retenue par un dispositif de blocage 25 qui est dans cet exemple constitué par une lame de ressort incurvée qui prend appui ou s'engage dans un évidement approprié de la face avant 18 (voir figure 4).

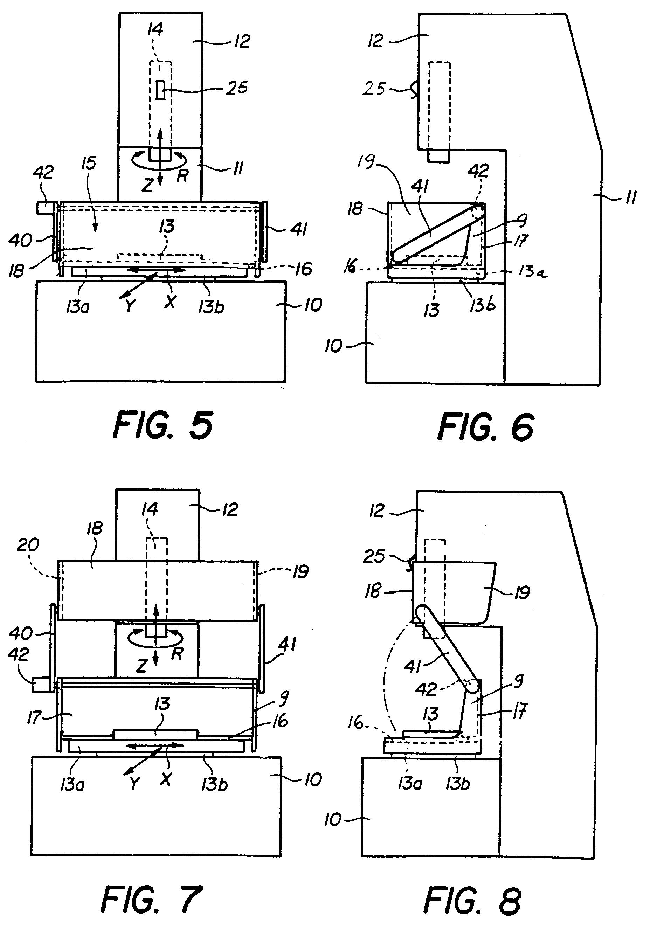

Les figures 5 à 8 représentent une forme de réalisation de la machine à électro-érosion définie ci-dessus, qui diffère de la réalisation illustrée par les figures 1 à 4 en ce que le mécanisme de remontée du bac comporte deux paires de bras rapprochés et masqués par des capots 40 et 41 ainsi qu'un moteur électrique 42 qui actionne les bras. Les autres composants de la machine sont identiques et ne seront pas décrits en détails. Ils conservent les mêmes références que celles attribuées aux composants correspondants de la machine représentée par les figures 1 à 4.

La présente invention n'est pas limitée aux formes de réalisation décrites, mais peut subir différentes modifications et se présenter sous diverses variantes évidentes pour un homme de l'art.

Ainsi, la partie fixe du bac selon l'invention peut n'être constituée que par le fond et la paroi arrière du bac, la partie mobile comprenant la paroi avant et l'ensemble des faces latérales.

Le dispositif de la présente invention peut être monté sur une machine d'enfonçage dont l'électrode-outil n'est pas rotative. La table de travail 13 peut être séparée de la table croisée XY par le fond du bac d'usinage et fixée sur ce dernier comme dans les exemples ci-dessus; elle peut aussi être encastrée dans ce dernier ou même constituer ce dernier. Cette table de travail peut être fixe, tandis que la tête d'usinage est actionnée selon des axes croisés X et Y par exemple perpendiculaires à l'axe Z.

Selon d'autres variantes, le dispositif de la présente invention peut être monté sur une machine d'électroérosion pour découper avec un fil-électrode et venir s'appuyer en position haute sur le chariot portant la tête supérieure.

Le dispositif de la présente invention peut aussi être monté sur une machine ne présentant par une colonne, mais un portique, ou présentant toute autre type de constitution connue en soi.

## Revendications

1. Bac de travail (15) pour machine-outil destiné à recevoir le liquide d'usinage et la pièce à usiner, comportant une partie fixe et une partie mobile, la partie fixe comprenant le fond (16) et la face arrière (17) du bac, et la partie mobile, la face avant (18) et au moins une partie (19,20) de l'une des parois latérales de ce bac, caractérisé en ce que le bac comporte des moyens articulés (21,22) pour relever ladite partie mobile et que la partie mobile est agencée pour pouvoir occuper une position basse, dite position d'usinage, dans laquelle elle est ajustée de façon étanche à la partie fixe (16,17) pour former ledit bac (15), et une position de repos, dans laquelle elle est relevée au-dessus de la partie fixe (16,17).

2. Bac selon la revendication 1 caractérisé en ce que lesdits moyens articulés (21, 22) sont agencés pour relever la partie mobile (18, 19, 20) parallèlement à elle-même.

3. Bac selon la revendication 1, caractérisé en ce que lesdits moyens articulés comportent deux paires de bras parallèles (21 respectivement 22) articulés, d'une part sur la partie fixe (16, 17) et, d'autre part sur la partie mobile (18, 19, 20).

4. Bac selon la revendication 1, caractérisé en ce que lesdits moyens articulés (21, 22) sont associés à des moyens mécaniques (23) pour déplacer ladite partie mobile (18, 19, 20).

5. Bac selon la revendication 4, caractérisé en ce que lesdits moyens mécaniques (23) comportent une motorisation électromécanique, (42), et/ou au moins un ressort et/ou un contrepoids et/ou un vérin hydraulique ou pneumatique.

6. Bac selon la revendication 1, caractérisé en ce que la partie mobile comprend un organe coopérant avec un dispositif de blocage (25) en position haute.

7. Machine à électro-érosion caractérisée en ce qu'elle comporte un bac (15) selon l'une quelconque des revendication précédentes.

## Claims

1. Working tank (15) for a machine tool intended to receive the machining liquid and the workpiece, including a fixed part and a moving part, the fixed part comprising base (16) and the rear (17) of the tank, and the moving part comprising the front (18) and at least a part (19, 20) of one of the side walls of the tank, characterised in that the tank has articulated means (21, 22) for raising the said moving part and in that the moving part is adapted to be able to occupy a low position, called the machining position, in which it is fitted in a watertight manner to the fixed part (16, 17) to form the said tank (15), and a rest position, in which it is raised above the fixed part (16, 17).

2. Tank in accordance with claim 1, characterised in that the said articulated means (21, 22) are arranged in order to raise the moving part (18, 19, 20) parallel to itself.

3. Tank in accordance with claim 1, characterised in that the said articulated means include two pairs of parallel arms (21, 22 respectively), articulated on the one hand on the fixed part (16, 17) and on the other hand on the moving part (18, 19, 20).

4. Tank in accordance with claim 1, characterised in that the said articulated means (21, 22) are connected to mechanical means (23) for displacing the said moving part (18, 19, 20).

5. Tank in accordance with claim 4, characterised in that the said mechanical means (23) include an electromechanical motorisation (42) and/or at least one spring and/or a counterweight and/or a hydraulic or pneumatic jack.

6. Tank in accordance with claim 1, characterised in that the moving part includes an element co-operating with a locking device (25) in the upper position.

7. Electro-discharge machine characterised in that it includes a tank (15) in accordance with any one of the preceding claims.

## Patentansprüche

1. Arbeitsbehälter (15) für eine Werkzeugmaschine, bestimmt zur Aufnahme der Arbeitsflüssigkeit und des zu bearbeitenden Werkstücks, umfassend einen feststehenden Teil und einen beweglichen Teil, wobei der feststehende Teil einen Boden (16) und eine Rückwand (17) des Behälters und der bewegliche Teil die Frontwand und wenigstens einen Teil (19, 20) einer der Seitenwände dieses Behälters umfassen, dadurch gekennzeichnet, daß der Behälter angelenkte Mittel (21, 22) zum Hochheben besagten beweglichen Teils umfaßt, und daß der bewegliche Teil angeordnet ist, um eine untere Position, die Arbeitsposition, in der er dicht an dem feststehenden Teil (16, 17) sitzt, um besagten Behälter (15) zu bilden, und eine Ruheposition, in der er über den feststehenden Teil (16,17) angehoben ist, einzunehmen.

2. Behälter nach Anspruch 1, dadurch gekennzeichnet, daß besagte angelenkte Mittel (21, 22) zum Anheben des beweglichen Teils (18, 19, 20) parallel zueinander angeordnet sind.

3. Behälter nach Anspruch 1, dadurch gekennzeichnet, daß besagte angelenkte Mittel zwei Paare von parallelen Armen (21 bzw. 22), einerseits am feststehenden Teil (16, 17) und andererseits am beweglichen Teil (18, 19, 20) angelenkt, umfassen.

4. Behälter nach Anspruch 1, dadurch gekennzeichnet, daß besagte angelenkte Mittel mechanischen Mitteln (23) zum Verlagern besagten beweglichen Teils (18, 19, 20) zugeordnet sind.

5. Behälter nach Anspruch 4, dadurch gekennzeichnet, daß besagte mechanische Mittel (23) eine elektromechanische Motorisierung (42) und/oder wenigstens eine Feder und/oder ein Gegengewicht und/oder einen hydraulischen oder pneumatischen Zylinder umfassen.

6. Behälter nach Anspruch 1, dadurch gekennzeichnet, daß der bewegliche Teil ein Organ umfaßt, das mit einer Blockiervorrichtung (25) in oberer Position zusammenarbeitet.

7. Elektroerosionsmaschine, dadurch gekennzeichnet, daß sie einen Behälter (15) gemäß einem der vorhergehenden Ansprüche umfaßt.
